# EUROPEAN PATENT APPLICATION

(11) **EP 1 990 968 A1**
(43) Date of publication of application: **12.11.2008**
(21) Application number: 07009173.1
(22) Date of filing: 07.05.2007
(51) Int. Cl.: H04L 29/06, H04Q 7/38

(54) **Method for operating a telecommunication system**

(71) Applicant: Nokia Siemens Networks Oy, 02610 Espoo (FI)
(72) Inventor: The designation of the inventor has not yet been filed
(74) Representative: Bruglachner, Thomas E.

(57) **Abstract**

The invention provides a method for operating a telecommunication system with a number of subscriptions wherein each subscription at least comprises a public identifier and a private identifier of a respective user equipment (UE1, UE2). At least one of the public identifiers (IMPU) is shared between at least two of the number of subscriptions.

## Description

The invention relates to a method for operating a telecommunication system where the users may have one or more subscriptions, wherein each subscription at least comprises a public identifier and a private identifier of a respective user equipment.

Today, lots of users have several user equipments, for example a number of mobile phones or smart phones, either additional to or replacing fixed network telephones. Frequently, one of the devices is used for private purposes with a subscription to some network operator, while another device is used for business purposes, in turn subscribed with a different network operator. Thus, for each of the user equipments usually a separate subscription exists. Since the subscriptions are handled by different operators, each of them gets a different public identifier, e.g. a phone number. Modern networks allow keeping the same public identifier while using multiple physical user equipments. In order to do that, a "private identity" is associated to a specific device. Such identity is named "private" just because it is known only to the network and it is completely transparent to the end user. For example, it could be a serial manufacturing number of the device.

A disadvantage of this current situation is, that a calling party which wants to reach a user owning multiple subscriptions has to have the knowledge through which network operator the user is reachable, in order to select the corresponding public identity. Therefore, the calling party has to call the user trying each of his public identities. It has to be noted that not all networks may support the same telecommunication services, therefore some of them may provide a downgraded service and the caller has no way to prioritize the connection attempts to get the required service first.

A practical example is that while an user is at home, he has broadband Internet via DSL from a fixed network operator and mobile coverage at the same time from a mobile operator (MNO). This means that he can have cheap VoIP calls (or video-telephony over Internet) using the devices registered to the subscription handled by the fixed mobile network operator. At the same time, he is subscribed to the mobile operator only for voice service, which would be any way more expensive than VoIP. If the calling party wants call him, he cannot know in advance if it would be better to try the mobile number first or the VoIP number. Additionally, if the calling party wants to have a video call and tries the mobile number first, the connection will be established, but it will be downgraded to voice only because of the subscription options chosen by the user, though the video over the fixed network subscription would be possible.

It is therefore an object of the present invention to provide a method for operating a telecommunication system which avoids the above mentioned disadvantages and provides a better comfort for the users.

This object is solved with the features of the independent claim. Further embodiments of the invention are set out in the dependent claims.

According to the invention, a method for operating a telecommunication system with a number of subscriptions is provided wherein each subscription at least comprises a public identifier and a private identifier of a respective user equipment whereby at least one of the public identifiers is shared between at least two of the number of subscriptions.

With the method suggested by the invention a user having a number of user equipments which are assigned to different subscriptions is reachable with the same public identifier, such as the phone number, independent from the fact which of the user equipments he is currently using. A user therefore needs not to carry several user equipments with him to be reachable under one of his equipment's public identity. The subscriptions can be assigned to different or the same provider. They could belong to the same operator, if for example such operator has a subscription for the business users of a company connected to the public network through a PBX and a subscription for some company employees as individual customers as private users. Furthermore, the different subscriptions can refer to different telecommunication networks, either a mobile network or a fixed network.

According to an embodiment of the invention each of the subscription is stored as a respective dataset in a database of the telecommunication network when the respective user equipment is registering to a telecommunication system wherein the database is allowed to contain more than one dataset having the same public identifier assigned to different subscriptions. The datasets in the database of the telecommunication network are used for many purposes, among the others for charging, authentication, and in general when establishing connections between a calling party and the called party to which a number of subscriptions is assigned. The database accepts storing datasets having the same public identifier but being assigned to different subscriptions. The allowance to contain more than one datasets having the same public identifier assigned to different subscriptions can be seen as a precondition to enable a user to be reachable under the same public identifier within the telecommunication system which may comprise one or more telecommunication networks of any desired technology.

According to a further embodiment datasets comprising the same public identifier get linked with each other. This embodiment is helpful to easily find out all subscriptions of a respective user when this respective user is called by a calling party.

According to a further embodiment at least one of the datasets having the same public identifier is referred to a preference. The preference may be set by a user of the user equipment and will be stored within a respective dataset of the database or a user profile. With the preference the user will be able to inform the telecommunication system when establishing a connection between a calling party and the called party to which of his user equipments a call shall be directed.

According to a first alternative of a further embodiment the private identifiers of those datasets having the same public identifier are registered to the same connecting node of a number of connecting nodes of the telecommunication system. Registering of the user equipment on the database may be accomplished via known registration procedures. When the user wants to register a further user equipment related to a different subscription, the database has to check whether the user with the same public identity has already registered a device. The verification if the user has already registered an user equipment is done by verifying the public identifiers of the equipment that wants to get registered and the datasets of the database. This step has to be carried out to find out the connecting node to which an already registered user equipment is connected to. In the further registration procedure the found connecting node will be assigned to the new registered user equipment having the same public identifier as the already registered device. By registering the datasets having the same public identifier to the same connecting nodes of a number of connecting nodes of the telecommunication system known session establishment procedures can be carried out.

Upon receiving a request for a specific public identifier the connecting node will identify the user equipment based on the public parameter and at least one further parameter of the dataset. The further parameter may comprise the private identifier. In an alternative embodiment the further parameter may comprise an IP-address of the user equipment and optionally a port of the user equipment, and/or any identifier assigned to the user equipment by the network. During the session establishment the connecting node will identify the called party by its public identifier. Therefore, a query by the public identifier will be directed to the database in the telecommunication system. The database will return information about all users registered with the requested public identifier. The connecting node is than in a position to either choose one of them depending on the preference in the number of datasets. Afterwards an invite message will be forwarded to one or more of the user equipments by using their private identifiers.

According to a second alternative of an embodiment the private identifiers of those datasets having the same public identifier are registered to any of the connecting nodes of the telecommunication system. During the registration procedure of each of the user equipments no procedure needs to be carried out to determine the connecting node of the first registered user equipment.

To be able to start the session establishment upon receiving a request for a specific public identifier a network component and the database, respectively, will return a list containing those datasets with the requested public identifier, thereby indicating an allocation between the connecting nodes and the private identifiers. The list will be returned to a connecting node to which the calling party is connected. This connecting node will forward an invite message to all of those connecting nodes which are set out in the list. The connecting nodes are then able to retrieve information from the database to establish a connection to the preferred user equipment or user equipments.

A call is routed to all of those connecting nodes to which the number of user equipment with the same public identifier is connected.

According to a further embodiment the telecommunication system comprises an Internet Multimedia Subsystem (IMS). The public identifier may be an Internet Multimedia Public Identity (IMPU). The private identifier may be an Internet Multimedia Private Identity (IMPI). As a network element hosting the database a Home Subscriber Server (HSS) may be provided. As connecting node a Call Service Control Function is provided (CSCF). The connecting node, connected to the called party, may be a Serving - Call Service Control Function (S-CSCF) whereas the connecting node connected to the called party may be an Interrogating Call Service Control Function (I-CSCF). The user equipment may be based on a wireless or a wired technology.

The invention will further be explained by reference to the figures.
- Fig. 1: shows a schematic illustration of the sharing of a IMS public identifier between two IMS subscriptions;
- Fig. 2: shows a schematic illustration of a database being located in a Home Subscriber Server of an Internet Multimedia Subsystem (IMS);
- fig. 3: shows a schematic illustration of a telecommunication system according to a first embodiment of the invention; and
- fig. 4: shows a schematic illustration of a telecommunication system according to a second embodiment of the invention.

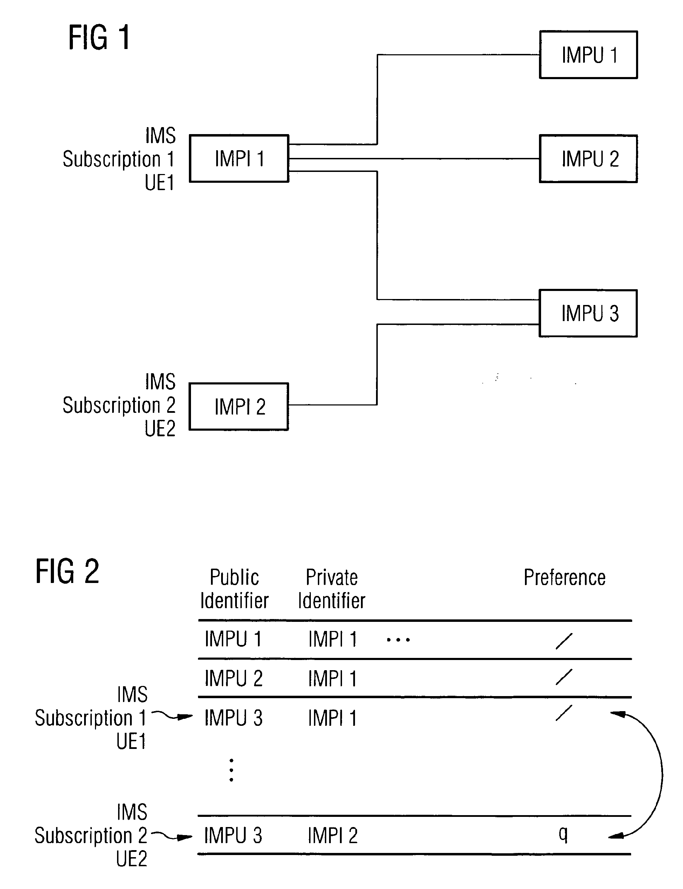

Fig. 1 shows in a schematic illustration the situation which underlies the current invention. A user owns two IMS subscriptions 1 and 2. The IMS subscription 1 is assigned to a user equipment UE1 whereas the IMS subscription 2 is assigned to a user equipment UE2. The user equipment UE1 comprises a private identity IMPI1. To the private identity IMPI1 three public identities IMPU1, IMPU2 and IMPU3 are assigned. The public identities IMPU1, IMPU2 and IMPU3 may, for example, be a phone number. The public identities IMPU1, IMPU2, IMPU3 as well as the private identity IMPI1 of user equipment UE1 are part of the IMS subscription 1. User equipment UE2 comprises a private identity IMPI2. The private identity IMPI2 is assigned to a public identity IMPU3. The public identity IMPU3 and the private identity IMPI2 of user equipment UE2 are part of the IMS subscription 2. As is apparent from fig. 1 IMS subscription 1 and IMS subscription 2 share the public identity IMPU3. This means, if a calling party calls the public identity IMPU3 a connection can be built up either to user equipment UE1 or to user equipment UE2 or to both user equipments UE1 and UE2, provided that both of the user equipments UE1 and UE2 are registered in a telecommunication system.

The telecommunication system may be of any type. Preferably the telecommunication system comprises an Internet Multimedia Subsystem (IMS). In TS 23.228 currently only the sharing of public identities and private identities within one IMS subscription is defined. This is pointed out in the upper half of fig. 1.

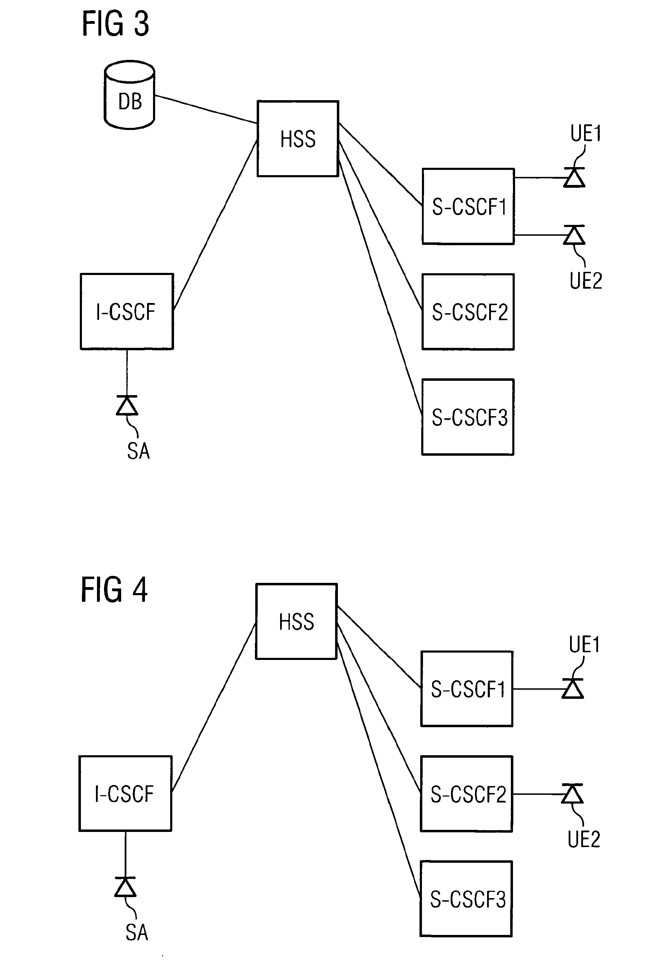

As known from prior art (cf. fig. 3 and 4) an IMS comprises a Home Subscriber Server HSS. The HSS is connected to different connection nodes. The connecting node to which a calling party is connected is called Interrogating Call Service Control Function (I-CSCF). A connecting node to which the called parties are connected are called Serving - Call Service Control Function (S-CSCF).

HSS comprises a database or is connected to a database DB which comprises for each subscription that currently is registered to the telecommunication system a dataset with all relevant parameters necessary to establish a connection between a called party and a calling party. The database at least comprises the public identifier and the private identifier of each subscription and the connection node to which the registered user equipment is registered to. In contrast to known databases a database according to the invention allows storing of more than one dataset having the same public identifier assigned to different subscriptions.

Fig. 2 shows an example of a database according to the example of fig. 1. As can be seen from the last two rows of the table the first IMS subscription 1 assigned to user equipment UE1 comprises IMPU3 (as public identifier) and IMPI1 as private identifier. The second IMS subscription 2 assigned to user equipment UE2 comprises IMPU3 (as public identifier) and IMPI2 (as private identifier). Furthermore a dataset of the second IMS subscription 2 comprises a preference flag q. The preference marker in the present example is used to indicate to which of the user equipments UE1 or UE2 a call has to be connected in case a calling party wants to establish a connection to the user and the public identity, respectively, of the user equipments UE1 and UE2. In an alternative embodiment, the preference marker which is part of a dataset of the database could be part of a user profile which can be stored in an additional database. Between the IMS subscription 1 and the IMS subscription 2 and the respective user profiles a relationship is set up. Furthermore datasets comprising the same public identifier IMPU3 are linked to each other which is indicated by the arrow in fig. 2. The link between two or more datasets comprising the same public identifier simplifies determining all relevant datasets concerning a respective public identifier in case a call shall be directed to a specific public identifier.

Following, the registration of the different user equipments UE1 and UE2 will be explained. It is assumed that user equipment UE1 which is part of IMS subscription 1 is already registered to the telecommunication system. As a result, the database as shown in fig. 2 comprises already a dataset concerning user equipment UE1. In general, registration of the user equipment of a user having several IMS subscriptions with the same public identifier is done by using standard methods. Additionally, when registering the user equipment UE2 it has to be checked whether an user equipment with the same public identity has already been registered in the database. Since user equipment UE1 is the first user equipment that has been registered in the database no such dataset exists. When the user wants to register his second user equipment UE2 which is assigned to IMS subscription 2 HSS accordingly has to check whether there is already a registration comprising the same public identifier, here IMPU3. Since in the present example this is the case HSS determines to which connecting node S-CSCF user equipment UE1 is assigned. According to the example shown in fig. 3 UE1 is assigned to S-CSCF1. Therefore, user equipment UE2 will be assigned to S-CSCF1, too. Now the registration process within the database as shown in fig. 2 is completed.

When a calling party SA connected to I-CSCF wants to establish a session with the user owning user equipments UE1 and UE2 a request message containing the public identifier IMPU3 is sent to HSS. HSS accesses the database with the registered user equipments and returns a message in which I-CSCF is informed that the requested user equipments are assigned to S-CSCF1. Therefore, I-CSCF directly contacts S-CSCF1, thereby providing information about the requested public identifier IMPU3. S-CSCF1 then requests information from the database accessible by HSS to determine to which of the user equipments UE1 and UE2 a connection shall be established. Since the database contains a preference in the dataset assigned to UE2 which indicates that the user prefers connections to UE2 a session establishment will be made between SA and user equipment UE2.

In an alternative embodiment shown in fig. 4 user equipments UE1 and UE2 containing the same public identity IMPU3 (as indicated in the table of fig. 2) are assigned to different connecting nodes S-CSCF1 and S-CSCF2, respectively. In a scenario as shown in fig. 4 while registering of the user equipments UE1 and UE2 it is not necessary to determine to which S-CSCF the first registered user equipment is assigned to.

To enable a session establishment originating from SA HSS returns a list containing all datasets comprising a requested public identifier, in the example IMPU3. I-CSCF contacts all of those S-CSCF's (here S-CSCF1 and S-CSCF2) which are in the received list. Each of the contacted S-CSCF's accesses the database in HSS to find out whether there are any preferences in the database. If a preference is set in a specific dataset only the respective user equipment will be contacted. Otherwise all of the user equipments will be contacted and the user has to decide with which of them he wants to establish a session.

In general, the identification of the called party can be based on the duplet "public identity and private identity". For this purpose, the private identity has to be added into the invite message by the calling user equipment or at least in the signalling at registration time.

As an alternative, S-CSCF can identify the called user based on the duplet "public identity, IP-address of the user equipment and port of the user equipment".

## Claims

1. A method for operating a telecommunication system with a number of subscriptions wherein each subscription at least comprises a public identifier and a private identifier of a respective user equipment (UE1, UE2), whereby at least one of the public identifiers (IMPU) is shared between at least two of the number of subscriptions.

2. The method according to claim 1, wherein each of the subscriptions is stored as a respective dataset in a database of the telecommunication network when the respective user equipment (UE1, UE2) is registering to the telecommunication system wherein the database is allowed to contain more than one dataset having the same public identifier assigned to different subscriptions.

3. The method according to claim 2, wherein datasets comprising the same public identifier (IMPU) get linked with each other.

4. The method according to claim 2 or 3, wherein at least one of the datasets having the same public identifier (IMPU) is referred to a preference.

5. The method according to claim 4, wherein the preference is set by a user of the user equipment (UE1, UE2) and will be stored within a respective dataset of the database or a user profile.

6. The method according to one of the claims 2 to 5, wherein the private identifiers of those datasets having the same public identifier are registered to the same connecting node (S-CSCF) of a number of connecting nodes (S-CSCF) of the telecommunication system.

7. The method according to claim 6, wherein upon receiving a request for a specific public identifier (IMPU) the connecting node (S-CSCF) will identify the user equipment (UE1, UE2) based on the public parameter and at least one further parameter of the dataset.

8. The method according to claim 7, wherein the further parameter comprises the private identifier.

9. The method according to claim 7, wherein the further parameter comprises an IP-address of the user equipment (UE1, UE2) and optionally a port of the user equipment (UE1, UE2) and/or any other identifier assigned to the user equipment by the network.

10. The method according to one of the claims 2 to 5, wherein the private identifiers of those datasets having the same public identifier are registered to any of the connecting nodes of the telecommunication system.

11. The method according to claim 10, wherein upon receiving a request for a specific public identifier (IMPU) a network component will return a list containing those datasets with the requested public identifier, thereby indicating an allocation between the connecting nodes and the private identifiers.

12. The method according to claim 11, wherein a call is routed to all of those connecting nodes to which the number of user equipment (UE1, UE2) with the same public identifier is connected.

13. The method according to one of the preceding claims, wherein the telecommunication system comprises an Internet Multimedia Subsystem (IMS).

14. The method according to claim 13, wherein the public identifier (IMPU) is a Internet Multimedia Public Identity.

15. The method according to claim 13 or 14, wherein the private identifier (IMPI) is a Internet Multimedia Private Identity.

16. The method according to any of the claims 13 to 15, wherein as a network element hosting the database a Home Subscriber Server is provided.

17. The method according to any of the claims 13 to 16, wherein as connecting node a Call Service Control Function is provided.

18. The method according to any of the claims 13 to 17, wherein the user equipment (UE1, UE2) is based on a wireless or a wired technology.
